# EUROPÄISCHE PATENTSCHRIFT

(11) **EP 1 519 118 B1**
(45) Veröffentlichungstag und Bekanntmachung des Hinweises auf die Patenterteilung: **08.08.2007**
(21) Anmeldenummer: 04090360.1
(22) Anmeldetag: 17.09.2004
(51) Int. Cl.: F24F 3/14, F24F 6/08, F24D 19/00

(54) **Verfahren und Vorrichtung zur Befeuchtung der Luft in raumlufttechnischen Anlagen von Gebauden und Fahrzeugen**
Method and device for air humidification of rooms and vehicles
Méthode et appareil pour humidifier l'air de locaux et de véhicules

(30) Priorität: 18.09.2003 EP 03090306
(43) Veröffentlichungstag der Anmeldung: 30.03.2005
(73) Patentinhaber: Möritz, Martin, Dr.-Ing., 10409 Berlin (DE); Peters, Hans, Dr.-Ing., 13353 Berlin (DE)
(72) Erfinder: Möritz, Martin, Dr.-Ing., 10409 Berlin (DE); Peters, Hans, Dr.-Ing., 13353 Berlin (DE)
(74) Vertreter: Sander, Rolf

(56) Entgegenhaltungen:
- EP-A- 0 092 527
- WO-A-02/095297
- DE-A- 2 260 225
- DE-A- 3 728 730
- US-A- 2 110 268

## Beschreibung

Die Erfindung betrifft eine Vorrichtung zur Erwärmung eines Luftstromes mit einem im Wege des Luftstromes angeordneten und von dem Luftstrom durchströmbaren Wärmeaustauschregister, das Wärmeaustauschflächen und Heizelemente aufweist, welche wärmeleitend mit den Wärmeaustauschflächen verbunden sind, wobei Luftbefeuchtungsmittel die relative Luftfeuchtigkeit des erwärmten Luftstromes erhöhen.

Die Erfindung betrifft ferner ein Verfahren zum Befeuchten eines ein Wärmeaustauschregister durchsetzenden Luftstromes.

Eine solche Vorrichtung und ein solches Verfahren sind beispielsweise aus der DE 22 60 225 A bereits bekannt. Die dort offenbarte Vorrichtung weist ein Wärmeaustauschregister mit als Lamellen ausgebildeten Wärmeaustauschflächen auf, die von einem Rohrleitungssystem mäanderförmig durchsetzt werden. Dabei wird das Rohrleitungssystem von einer Heizflüssigkeit durchströmt, die in dem geschlossenen Rohrleitungssystem umläuft. Das Wärmeaustauschregister ist im Wege eines Luftstroms angeordnet, wobei dieser die über die wärmeleitende Flüssigkeit und das Rohrleitungssystem in die Lamellen transportierte Wärme aufnimmt, so dass sich die Temperatur des Luftstromes erhöht. Zur Erzeugung des Luftstroms wird üblicherweise atmosphärische Frischluft mittels eines Gebläses angesaugt. Die angesaugte Frischluft hat insbesondere bei niedrigen Temperaturen beispielsweise im Winter nur eine geringe Aufnahmekapazität für Wasser und daher einen geringen absoluten Wassergehalt. Durch die Erwärmung der Luft erhöht sich die Aufnahmekapazität für das Wasser. Wird die Luft bei der Erwärmung nicht gleichzeitig befeuchtet, sinkt mit zunehmender Temperatur die relative Feuchte der Luft. Je geringer die relative Luftfeuchte der Luft ist, desto trockener wird sie empfunden. Trockene Luft kann zu gesundheitlichen Belastungen durch Austrocknung der Schleimhäute und zu weiteren unangenehmen Folgen führen. Zur Erhöhung der relativen Luftfeuchtigkeit sind daher Luftbefeuchtungsmittel vorgesehen. Gemäß der DE 260 225 A erstreckt sich zur Luftbefeuchtung ein Düsenrohr durch die Lamellen des Wärmeaustauschregisters. Das Düsenrohr ist mit Bohrungen ausgestattet, durch die das Wasser im Wärmeaustauscher der wärmeventilierenden Einheit tropft. Das ausgetretene Wasser wird im Wärmeaustauscher teilweise verdampft und dabei von dem bereits erwärmten Luftstrom aufgenommen, dessen Luftfeuchte auf diese Art und Weise erhöht wird. Zur Regulierung der Luftfeuchtigkeit sind ein elektromagnetisches Ventil und ein Kapillarrohr vorgesehen.

Aus der GB 400,749 ist ein Lamellen aufweisender Wärmeaustauscher bekannt, der im Wege eines Luftstromes angeordnet ist. In Richtung des Luftstromes hinter dem Wärmeaustauschregister sind Sprühköpfe angeordnet, aus denen Wasser in Form fein verteilter Tröpfchen abgegeben wird. Durch die Wärme des Luftstroms wird das Wasser verdampft und von dem Luftstrom aufgenommen.

Die US 2,065,707 offenbart einen Heizkörper, der ein Rohrleitungssystem mit Heizrippen aufweist. Das Rohrleitungssystem wird von einer wärmeleitenden Flüssigkeit durchströmt. An der Oberfläche der Heizrippen kommt es zur Erwärmung von Raumluft. Zur Luftbefeuchtung der Raumluft sind zwischen den Heizrippen Düsen angeordnet, die Wasser auf die Oberfläche der Heizrippen sprühen, wodurch dieses verdampft und von der erwärmten Luft aufgenommen wird.

Aus der DE 15 013 61 ist ein als Kühlturm ausgebildeter Wärmeaustauscher bekannt, wobei Wasser durch Rinnen, die im oberen Bereich des Kühlturmes angeordnet sind, auf Wärmeaustauscherrohre getropft wird.

In der JP 560 31 817 ist eine Vorrichtung zur Luftbefeuchtung von Lüftungsanlagen in Fahrzeugen beschrieben, bei der in Luftströmungsrichtung gesehen, vor dem Erhitzer, quer zur Luftströmung eine Injektionsdüse angeordnet ist. Über diese Injektionsdüse wird quer zur Luftströmungsrichtung ein Wasserstrahl auf eine Prallplatte gelenkt, auf welcher der Wasserstrahl beim Auftreffen in ein feines monodisperses Aerosol zerschellt, welches sich über den Strömungsquerschnitt der Luft verteilt. Beim anschließenden Durchströmen der wasseraerosolhaltigen Luft verdunstet das Wasser auf Grund der erhöhten Temperatur relativ rasch.

Aus der DE 3728730 A1 ist ein plattenförmiger Heizkörper offenbart, der ein poröses Bauteil umfasst, in dem sich eine Heizflüssigkeit führende Stahlrohre als Heizelemente erstrecken. In dem porösen Material sind Bohrungen zur Aufnahme von Verdunstungswasser vorgesehen. Der Heizkörper ist beispielsweise an einer Wand befestigt und nicht zur Erwärmung eines Luftstromes vorgesehen.

Die EP 0 092 527 A2 offenbart ebenfalls einen Heizkörper mit einem Heizungsgehäuse, in dessen unterem Bereich sich Heizelemente erstrecken. Oberhalb des Heizelementes ist eine Einrichtung zur Luftbefeuchtung vorgesehen, die ein mit Wasser befülltes Behältnis umfasst. In das Behältnis erstrecken sich rohrförmige Elemente, welche die aufsteigende erwärmte Luft kanalisieren. Die Wände des Behältnisses sind mit einer porösen Schicht belegt, so dass aufgrund eines Kapillareffektes die Kontaktfläche zwischen der vorbeiströmenden erwärmten Luft und dem Befeuchtungswasser erhöht ist.

Die US 2,110,268 offenbart eine raumlufttechnische Anlage mit einem Gebläse zum Erzeugen eines Luftstromes. Im Wege des Luftstromes sind nacheinander eine Befeuchtungseinrichtung sowie eine Heizkammer angeordnet, wobei zwischen der Heizkammer und der Befeuchtungseinrichtung kein wärmeleitender Kontakt besteht. Die Befeuchtungseinrichtung weist hohle Kammern aus einem porösen Material auf, die mit Befeuchtungswasser befüllbar sind.

Die WO 02/095297 A2 offenbart eine Vorrichtung zur Erwärmung eines Luftstromes mit im Wege des Luftstromes angeordneten Wärmeaustauschregistern, das Wärmeaustauschflächen und Heizelemente aufweist. Die Heizelemente sind wärmeleitend mit den Wärmeaustauschflächen verbunden. Ferner ist ein Lamellenfeld zur Luftbefeuchtung vorgesehen, wobei eine Berieselungsanlage zum Berieseln des Lamellenfeldes von oben mit Befeuchtungswasser vorgesehen ist. Die Befeuchtungslamellen können mit einem hydrophilen Material beschichtet sein.

Aus dem landläufigen Stand der Technik ist ferner bekannt in Richtung eines Luftstromes gesehen hinter einem Wärmeaustauschregister eine separate Befeuchtungsanlage beispielsweise in Form eines Verrieselungsfeldes oder Rieselfilmbefeuchter aufzustellen. Auf Grund der separaten Ausführung von Wärmeaustauschregister und Befeuchtungsanlage entstehen jedoch hohe Kosten. Darüber hinaus ist eine solche raumlufttechnische Anlage raumgreifend. Durch die separate Aufstellung von Wärmaustauschregister und Befeuchtungsanlage kommt es ferner zu schlechten Wärmeübergängen, da die Wärme allein durch die Luft von dem Wärmeaustauschregister zu dem Befeuchtungsaggregat transportiert wird.

Auch haften den vorbekannten Vorrichtungen der Nachteil an, dass durch die Abgabe von Wasser in Tröpfchenform, also durch Versprühen, Verrieseln oder dergleichen, die Gefahr besteht, dass das flüssige Wasser nicht vollständig verdampft wird. Das auf diese Weise entstehende unerwünschte Spritz- oder Verlustwasser kann von der Luftströmung aus dem Wärmaustauscher ausgetragen werden und sich außerhalb des Wärmeaustauschregisters sammeln. Auf diese Weise kommt es zu Korrosion, Wasserrändern, Ablagerungen und vor allem zu mikrobiologischer Verunreinigung durch Keimwachstum, welche eine ernsthafte Gesundheitsgefährdung in einem zu belüftenden Raum im Gefolge habe können.

Aufgabe der Erfindung ist es daher ein Verfahren und eine Vorrichtung der eingangs genannten Art bereitzustellen, mit denen das Auftreten von Verlustwasser weitgehend vermieden wird, wobei gleichzeitig eine kompakte Bauform ermöglicht ist.

Die Erfindung löst diese Aufgabe ausgehend von der eingangs genannten Vorrichtung dadurch, dass die Luftbefeuchtungsmittel ein poröses Material umfassen, das wärmeleitend mit den Heizelementen verbunden ist, wobei eine Wasserspendeeinheit zum Benetzen des porösen Materials mit Wasser vorgesehen ist.

Die Erfindung löst diese Aufgabe ferner durch ein Verfahren zum Befeuchten eines einen Wärmeaustauschregister durchströmenden Luftstromes, bei dem Wasser auf ein poröses Material aufgebracht wird, das wärmeleitend mit Heizelementen des Wärmeaustauschregisters verbunden ist.

Erfindungsgemäß wird das Wasser nicht mehr wie im Stand der Technik als feines Aerosol dem Luftstrom zugeführt. Das Wasser wird vielmehr nahezu vollständig von dem porösen Material aufgenommen. Da das poröse Material wärmeleitend mit den Heizelementen verbunden ist, kommt es bei Betrieb der Vorrichtung zum Verdampfen des zur Befeuchtung vorgesehenen Wassers, ohne dass größere Flüssigkeitsmengen von dem Luftstrom mitgerissen werden und als Verlustwasser aus der Vorrichtung ausgetragen werden. Zur Bereitstellung einer wärmeleitenden Verbindung kontaktieren die Heizelemente beispielsweise das poröse Material. Abweichend hiervon sind die Heizelemente mittels Wärmebrücken wie beispielsweise mittels der Wärmeaustauschflächen mit dem porösen Material verbunden. Um große Wärmeverluste zu vermeiden, sind solche Wärmebrücken jedoch entweder direkt in dem Wärmeaustauchregister angeordnet oder aber als Befestigungsmittel ausgebildet, mit denen beispielsweise eine Halterung des porösen Materials an dem Wärmeaustauschregister befestigt ist. Die erfindungsgemäße Wärmekopplung zwischen dem porösen Material führt daher in jedem Falle zu einem kompakten Bauteil, das die Funktionen der Luftstromerwärmung und der Luftstrombefeuchtung in sich vereint, wobei die Gefahr von Spritzwasser nahezu vollständig vermieden ist.

Auch wird die Wärme erfindungsgemäß nicht wie beim Stand der Technik üblich über den erwärmten Luftstrom von den Wärmeaustauschflächen auf die Luftbefeuchtungsmittel transportiert, da hierzu - wie bereit ausgeführt wurde - zwischen den Heizelementen und dem porösen Material entweder ein direkter Kontakt oder aber eine Wärmebrücke beispielsweise aus einem metallischen Material vorgesehen ist. Mit anderen Worten ist erfindungsgemäß ein Wärmekontakt zwischen den Luftbefeuchtungsmitteln und den Wärmeaustauschflächen bereitgestellt. Hierdurch kommt es zu einem erheblich stärkeren Aufheizen des porösen Materials und somit zu einem raschen und tropffreien Verdampfen des befeuchtenden Wassers.

Die Heizelemente weisen zweckmäßigerweise eine Rohrleitung auf, welche die Wärmeaustauschflächen des Wärmeaustauschregisters in einer Querrichtung zum Luftstrom mäanderförmig durchsetzen. Dabei befinden sich Wärmeaustauschflächen in wämeleitendem Kontakt mit dem Rohleitungssystem, welches über ein Anschlussrohrsystem mit einer Umwälzpumpe und einem Heizaggregat verbunden ist. Dabei ist ein geschlossenes Rohleitungssytem ausgebildet, in dem eine wärmeleitende Flüssigkeit durch die Umwälzpumpe umgewälzt wird. Als wärmeleitende Flüssigkeit dient vorteilhafterweise kostengünstiges Wasser, das durch Erhitzen mit dem Heizaggregat eine Temperatur von etwa 50 bis 90° Celsius aufweist.

Das poröse Material weist zweckmäßigerweise eine Porengröße von weniger als 20 µm und insbesondere von weniger als 10 µm auf. Beispielsweise dient Aluminiumoxid als poröses Material. Bei einigen Anwendungen kann es zweckmäßig sein, dass auch das poröse Material von den Heizelementen erhitzt wird. Die Heizelemente können beispielsweise elektrische Heizelemente umfassen. Auf diese Weise ist eine Luftbefeuchtung auch dann möglich, wenn keine Erwärmung des Luftstroms erforderlich ist.

Auch kann es zweckmäßig sein, dass das poröse Material eine möglichst hohe Wärmeleitfähigkeit aufweist.

Vorteilhafterweise weist das Wärmaustauschregister gleichmäßig voneinander beabstandete Lamellen als Wärmeaustauschflächen auf, die von der heizenden Rohrleitung in Querrichtung durchsetzt sind. Der beispielsweise durch ein Gebläse einer raumlufttechnischen Anlage erzeugte Luftstrom streicht an den Lamellen, die üblicher Weise eine Materialstärke von 0,1 bis 0,5 mm aufweisen, vorbei. Hierbei wird Wärme von der Rohrleitung auf die Lamellen und von dort auf den Luftstrom übertragen, wobei die Lamellen die Wärmaustauschfläche erheblich vergrößern und auf diese Weise einen verbesserten Wärmübergang bereitstellten.

Bei einer zweckmäßigen Weiterentwicklung ist das poröse Material zumindest teilweise hohl ausgebildet und die Wasserspendeeinheit zum Befeuchten des hohlen porösen Materials von Innen eingerichtet.

Gemäß einer diesbezüglich vorteilhaften Weiterentwicklung ist das poröse Material als Befeuchtungsrohre realisiert, wobei die Wasserspendeeinheit einen Wasserdurchfluss durch die Befeuchtungsrohre ermöglicht. Auf Grund der Porösität der Befeuchtungsrohre kommt es beim Durchlauf des Wassers zur Wasseraufnahme in der porösen Rohrwandung, wobei die Befeuchtungsrohre durch den Wärmekontakt mit den Wärmeaustauschflächen wirkungsvoll erhitzt werden, so dass das von der Rohrwandung aufgenommene Wasser langsam verdampft. Dabei ist der Wasserdruck oder die Wassermenge, mit der die Oberfläche des porösen Materials benetzt wird vorteilhafterweise so eingestellt, dass eine Tropfenbildung an den Befeuchtungsrohren vermieden ist. Die Regelung des Wasserdruckes oder der Wassermenge erfolgt beispielsweise über eine Steuereinheit die mit einem im Luftstrom angeordnetem Sensor zum Messen der relativen Luftfeuchtigkeit verbunden ist. Dabei ist der Sensor dem Wärmeaustauschregister in Richtung des Luftstromes nachgeordnet. Die Steuereinheit ist ferner mit einer Umwälzpumpe verbunden, mit der der Druck oder die Menge des benetzenden Wassers regelbar ist. Stellt die Steuereinheit mittels des Sensors einen Abfall der relativen Luftfeuchtigkeit unterhalb eines einstellbaren Schwellenwertes fest, erhöht die Steuereinheit die zugeführte Wassermenge, den Wasserdruck oder die benetzte Oberfläche des porösen Materials, so dass die Luftfeuchtigkeit erhöht wird. Hierbei gelangen übliche Regelmechanismen zur Anwendung, die als solche bekannt sind, so dass an dieser Stelle hierauf nicht eingegangen zu werden braucht. Der eingestelle Wasserdruck in den Befeuchtungsrohren ist auch von der Porengröße des porösen Materials abhängig, aus dem die Befeuchtungsrohre gefertigt sind.

Bei einer hiervon abweichenden Regelung ist es möglich, dass zweckmäßige Sperrventile oder eine Verteilereinheit die Anzahl der porösen Rohre, die von Wasser durchflossen werden, festlegen. Weist der Luftstrom beispielsweise auch nach dem Erwärmen eine zufriedenstellend hohe relative Luftfeuchtigkeit auf, wird eine hinreichend große Anzahl von porösen Rohren mittels der Sperrventile von dem Wasserdurchlauf abgekoppelt. Die Sperrventile werden beispielsweise durch eine Steuereinheit betätigt, die wiederum mit einem im Luftstrom angeordnetem Sensor verbunden ist. Abweichend hiervon können die Sperrventile jedoch auch von Hand betätigt werden.

Weiterhin besteht zur Optimierung der Befeuchterleistung bzw. zur optimalen Abstimmung zwischen der Lufterwärmung und der Luftbefeuchtung die Möglichkeit, die Leistung des Lufterwärmers nicht bzw. nicht nur über die Förderleistung der konventionell vorhandenen Umwälzpumpe, sondern mittels ansteuerbaren Ventilen bereichsweise einzustellen, d.h. die das Wärmetauscherregister durchziehenden Wärmerohrleitungen werden in Gruppen zusammengefasst und gruppenweise je nach Bedarf zu- oder abgeschaltet.

Vorteilhafterweise sind poröse Wärmeaustauschflächen vorgesehen, wobei die Wasserspendeeinheit zum Aufbringen des Wassers auf die Wärmeaustauschflächen eingerichtet ist. Auf diese Weise vereinen die Wärmeaustauschflächen zwei Funktionen in sich. Sie dienen zum einen zum Erwärmen des Luftstroms. Zum anderen wird Befeuchtungswasser, mit dem die Wärmeaustauschflächen benetzt werden, kontrolliert verdampf. Dabei bringt die Wasserspendeeinheit das Wasser beispielsweise von außen, also von vorn, von hinten oder von oben auf die porösen Wärmeaustauschflächen auf. Abweichend hiervon werden die porösen Wärmeaustauschflächen von Wasser führenden Rohren durchsetzt, welche Düsen aufweisen. Hierbei kann es zweckmäßig sein, auch die befeuchtenden Rohre aus einem porösen Material zu fertigen.

Vorteilhafterweise sind Luftbefeuchtungsflächen vorgesehen, die aus einem porösen Material bestehen, wobei die Wasserspendeeinheit zum Aufbringen des Wassers auf die Luftbefeuchtungsflächen eingerichtet ist. Das poröse Material ist also mit anderen Worten zumindest teilweise durch poröse flächenhafte Luftbefeuchtungsflächen realisiert, die wärmeleitend mit den Wärmeaustauschflächen verbunden sind. Das Aufbringen des Wassers auf die Luftbefeuchtungsflächen erfolgt bei dieser Weiterentwicklung mittels einer wie zuvor beschriebenen Wasserspendeeinheit. So ist es beispielsweise möglich ein handelsübliches Lamellen aufweisendes Wärmeregister einzusetzen, wobei sich zwischen den Lamellen die Luftbefeuchtungsflächen erstrecken. Dabei verhindern die Luftbefeuchtungsflächen ein direktes Durchtropfen des beispielsweise aufgeträufelten Befeuchtungswassers. Im Rahmen der Erfindung ist auch ein Aufsprühen des Wassers von vorn oder entgegen dem Luftstrom auf die Luftbefeuchtungsflächen möglich.

Bei einer diesbezüglichen Weiterentwicklung bilden die Luftbefeuchtungsflächen ein Labyrinth aus. Durch die labyrinthartige Ausgestaltung wird eine verbesserte Aufnahme des Wassers beispielsweise von Außen ermöglicht. Ein Abtropfen des Wassers ist daher im Wesentlichen vermieden.

Gemäß einer weiteren zweckmäßigen Weiterentwicklung sind die Luftbefeuchtungsmittel als eine Beschichtung der Wärmeaustauschflächen mit dem porösen und/oder hydrophilen Material realisiert, wobei die Wasserspendeeinheit zum Aufbringen des Wassers von außen auf die Beschichtung eingerichtet ist. Gemäß diesem Ausführungsbeispiel wird das Wasser beispielsweise von einem Düsenrohr, das oberhalb der Vorrichtung angeordnet ist, durch Auftropfen auf die Wärmeaustauschflächen in den Wärmeaustauscher eingeleitet. Durch die Beschichtung der Wärmeaustauschflächen kommt es zu einem direkten Wärmekontakt zwischen der porösen und/oder hydrophilen Schicht und den Wärmeaustauschflächen.

Selbstverständlich ist es im Rahmen der Erfindung möglich sowohl eine poröse und/oder hydrophile Beschichtung als auch poröse Rohre vorzusehen. Auch andere Kombinationen der vorbeschriebenen Weiterentwicklungen liegen im Rahmen der vorliegenden Erfindung, wobei die Regelung beispielsweise wieder durch eine Steuereinheit, einem Sensor sowie einer Pumpe wie zuvor beschrieben bereitgestellt ist.

Zweckmäßiger Weise ist das poröse Material in einem separaten Verrieselungsfeld angeordnet, das wärmeleitend mit dem Wärmeaustauschregister verbunden ist. Gemäß dieser zweckmäßigen Weiterentwicklung sind beispielsweise poröse Luftbefeuchtungsflächen nicht zwischen Lamellen des Wärmeaustauschregisters angeordnet sondern in Richtung des Luftstromes hinter dem Wärmeaustauschregister und zwar einem separatem Verrieselungsfeld. Dabei ist das Verrieselungsfeld wärmeleitend mit dem Wärmeaustauschregister verbunden, d. h. das Verrieselungsfeld ist entweder direkt mit einem metallischen Befestigungsmittel an dem Wärmeaustauschregister befestigt oder aber über metallische Verbindungsstangen.

Vorteilhafterweise weisen die Luftbefeuchtungsmittel eine Feuchtigkeitsregelung auf. Eine solche Feuchtigkeitsregelung wurde bereits im Zusammenhang mit den weiter oben beschriebenen Weiterentwicklungen der Erfindung beschrieben.

Bei einer zweckmäßigen Weiterentwicklung des erfindungsgemäßen Verfahrens wird das poröse Material mittels eines oberhalb des Wärmeaustauschregisters angeordneten Düsenrohres mit Wasser benetzt. Bei dieser Variante der Erfindung ist das poröse Material beispielsweise in Form einer labyrinthartigen Anordnung ausgebildet, so dass ein Durchtropfen des Wassers vermieden wird.

Abweichend hiervon ist ein poröses Material vorgesehen, das hohl ausgebildet ist, wobei das hohl ausgebildete Material im Inneren von Wasser durchströmt wird. Hinsichtlich des Materials und dessen Porengröße wird bei dieser Weiterentwicklung der Erfindung zur Vermeidung von Wiederholungen auf die Ausführungen zu den porösen Rohren verwiesen.

Vorteilhafterweise weist die Feuchtigkeitsregelung eine Verteilereinheit auf, mit der die Größe der Oberfläche des benetzbaren porösen Materials bestimmbar ist. Mit Hilfe der Verteilereinheit ist die Wassermenge einstellbar, mit der das poröse Material benetzt wird. Zweckmäßigerweise wird der Druck mit Hilfe einer Druckregelung so eingestellt, dass ein Heruntertropfen von Wasser von dem porösen Material vermieden wird. Die Druckregelung umfass vorteilhafterweise einen Druckminderer. Der von dem Druckminderer eingestellte Druck beträgt beispielsweise zwischen 0,001 und 0,05 bar.

Gemäß einer diesbezüglich zweckmäßigen Weiterentwicklung ist in Richtung des Luftstromes ein handelsüblicher Tropfenabscheider nachgeschaltet. Der Tropfenabscheider hält gegebenenfalls vom Luftstrom mitgerissenes nicht verdampftes Wasser zurück.

Weiterhin kann es zweckmäßig sein, einen Bypasskanal zum Überbrücken des Wärmeaustauschregisters vorzusehen, wobei der Bypasskanal mit Lüftungsregelklappen versehen ist, mit denen der in den Bypasskanal eintretende Anteil des Luftstromes regelbar ist und wobei der über den Bypasskanal geleitete Anteil des Luftstromes mit dem über das Wärmeaustauchregister und das poröse Material geleiteten Anteil des Luftstromes vermischt wird. Gemäß dieser Weiterentwicklung der Erfindung können selbst ungewöhnlich hohe relative Luftfeuchtigkeiten beispielsweise im Bereich zwischen 60% bis nahezu 100% eingestellt werden. Mit Hilfe des Bypasskanals ist es möglich, den durch das Wärmeaustauschregister hindurch tretenden Teil des Luftstromes höher zu erwärmen als dies bei einem ungeteilten Luftstrom möglich wäre, da dieser dann als zu heiß empfunden würde. Der beispielsweise auf 27 Grad Celsius durch das Wärmeaustauschregister erwärmte Teilluftstrom ist dann in der Lage besonders viel Feuchtigkeit aus dem porösen Material aufzunehmen. Nach dem Vermischen mit dem über den Bypasskanal geleiteten unbehandelten Luftstrom wird dieser jedoch wieder abgekühlt, wobei der absolute Wassergehalt konstant bleibt und der vermischte Luftstrom eine als angenehm empfundene oder z.B. für einen industriellen Produktionsprozess erforderliche Temperatur sowie die gewünscht hohe relative Luftfeuchtigkeit aufweist.

Bei einer weiteren Variante der Erfindung sind in einer Seitenansicht abgeschrägte Lamellen vorgesehen. Dabei verlaufen die Lammellen so, dass diese sich in Richtung des Luftstromes von oben nach unten verbreitern. Nicht verdampftes flüssiges Wasser wird unter Einwirkung der Schwerkraft und des Luftstroms bevorzugt den schrägen Rand der Lamellen entlang laufen und wird von dem Luftstrom nur erschwert mitgerissen. Der Wassereintritt in Anlagenbereiche, welche der erfindungsgemäßen Vorrichtung nachgeschaltet sind, wird auf diese Weise vermieden.

Weitere zweckmäßige Ausgestaltungen und Vorteile der Erfindung sind Gegenstand der nachfolgenden Beschreibung von Ausführungsbeispielen der Erfindung unter Bezug auf die Figuren der Zeichnung, wobei gleich wirkende Bauteile mit gleichen Bezugszeichen versehen sind und wobei
- Figur 1: ein Ausführungsbeispiel der erfindungsgemäßen Vorrichtung in einer perspektivischen Darstellung,
- Figur 2: ein weiteres Ausführungsbeispiel der erfindungsgemäßen Vorrichtung gemäß Figur 1,
- Figur 3: eine Seitenansicht der Vorrichtung gemäß Figur 2,
- Figur 4: ein weiteres Ausführungsbeispiel der erfindungsgemäßen Vorrichtung in einer perspektivischen Darstellung,
- Figur 5: ein Ausführungsbeispiel der erfindungsgemäßen Vorrichtung mit Wärmeaustauscher und separatem Verrieselungsfeld,
- Figur 6: ein bevorzugtes Ausführungsbeispiel der erfindungsgemäßen Vorrichtung,
- Figur 7: eine Detailansicht der Vorrichtung gemäß Figur 6,
- Figur 8: die Vorrichtung gemäß Figur 7 mit nachgeschaltetem Tropfenabscheider,
- Figur 9: ein Ausführungsbeispiel der erfindungsgemäßen Vorrichtung mit Bypasskanal
- Figur 10: eine weiterentwickelte Vorrichtung gemäß Figur 6,
- Figur 11: eine Lage von Befeuchtungsrohren einer Vorrichtung gemäß Figur 10 und
- Figur 12: eine Verteileinheit der Vorrichtung gemäß Figur 10 zeigen.

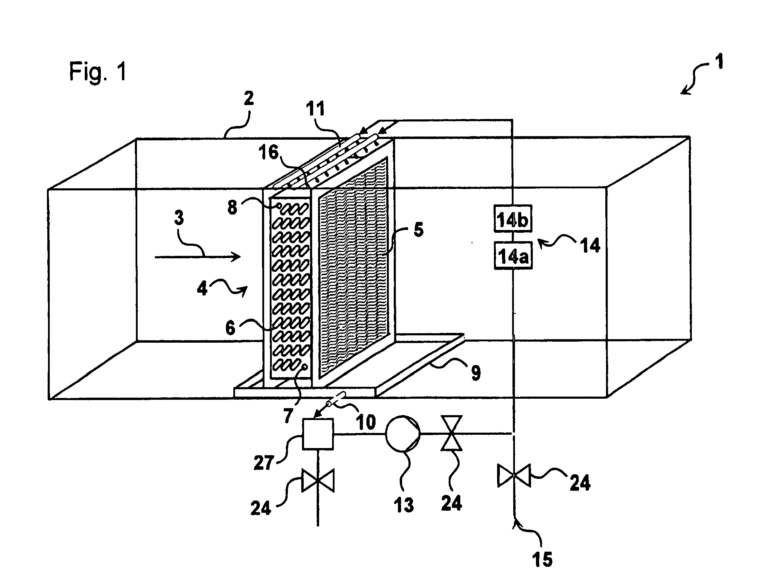

Figur 1 zeigt ein Ausführungsbeispiel der erfindungsgemäßen Vorrichtung 1 in einer perspektivischen Darstellung. Die gezeigte Vorrichtung 1 ist in einem kanalförmigen Gehäuse 2 einer raumlufttechnischen Anlage angeordnet, wobei ein figürlich nicht dargestelltes Gebläse einen Luftstrom 3 in Richtung des gezeigten Pfeils erzeugt. Dabei durchsetzt der Luftstrom 3 ein Wärmeaustauschregister 4 mit labyrinthartig angeordneten Wärmeaustauschflächen 5.

Zum Erhöhen der Temperatur des Luftstromes 3 dient ein Heizelement, welches in dem in Figur 1 gezeigten Ausführungsbeispiel als Rohrleitungssystem realisiert ist, das sich mäanderförmig in Querrichtung durch die Wärmeaustauschflächen 5 hindurch erstreckt und im folgenden als Heizschlange 6 bezeichnet ist.

Die Heizschlange 6 weist einen unteren Zulauf 7 sowie einen oberen Ablauf 8 auf. Der Zulauf 7 und der Ablauf 8 kommunizieren jeweils mit figürlich nicht dargestellten Verbindungsrohren, welche die in der Heizschlange 6 umgewälzte Heizflüssigkeit zu einer Umwälzpumpe und einem Heizaggregat leiten, wobei ein geschlossenes Gesamtrohrsystem ausgebildet ist. Zum Auffangen von möglicherweise entstehendem Kondenswasser dient eine Kondenswasserwanne 9, die mit einem Ablauf 10 versehen ist. Die über die Heizschlange 6 umgewälzte Heizflüssigkeit ist in dem gezeigten Ausführungsbeispiel Wasser, das eine Temperatur von 50 - 90°C aufweist. Die von dem Heizaggregat erzeugte Wärme wird von der durch die Verbindungsrohre herangeführten Heizflüssigkeit in die Heizschlange 6 transportiert, welche wärmeleitend mit den Wärmeaustauschflächen 5 verbunden ist. Mit anderen Worten, kontaktieren die Wärmeaustauschflächen die Heizschlange 6, so dass die Wärme von der Heizschlange 6 auf Wärmeaustauschflächen 5 transportiert wird und an der durch die Wärmeaustauschflächen 5 vergrößerten Oberfläche wirkungsvoll auf den Luftstrom 3 übertragen wird.

Zur Erhöhung der relativen Luftfeuchtigkeit des erwärmten Luftstromes 3 sind Luftbefeuchtungsmittel vorgesehen, die in dem in Figur 1 gezeigten Ausführungsbeispiel Düsenrohre 11 sowie ein poröses Material umfassen, aus dem die Wärmeaustauschflächen 5 bestehen. Die Luftbefeuchtungsmittel weisen ferner eine Umlaufpumpe 13 sowie eine Wasseraufbereitungseinheit 14 auf, die aus einem Ionenaustauscher 14a und einer Umkehrosmose 14b besteht und zur Filterung des von einem Wasserzulauf 15 bereitgestellten Wassers dient. Dabei sind Düsenrohre 11 oberhalb des Wärmeaustauschregisters 4 angeordnet und mit Öffnungen 16 ausgerüstet, durch die das mittels der Umlaufpumpe 13 herangeführte Befeuchtungswasser langsam auf die porösen Wärmeaustauschflächen 5 geträufelt wird. Die porösen Wärmeaustauschflächen 5 nehmen die Flüssigkeit vollständig in sich auf, so dass unerwünschtes Spritz- oder Verlustwasser fast vollständig vermieden ist. Kondenswasser oder trotz des porösen Materials entstehendes Tropfwasser sammelt sich in der Kondenswanne 9 und wird über den Ablauf 10 einem Abwasserfang 27 mit Niveauregelung zugeleitet. Ansteuerbare Sperrventile 24 dienen zur Regelung des Zu- oder Abflusses des Wassers. Das von dem porösen Material der Wärmeaustauschflächen 5 aufgenommene Wasser wird auf Grund der Erwärmung durch die Heizflüssigkeit allmählich verdampft und von dem Luftstrom 3 aufgenommen, dessen relative Luftfeuchtigkeit auf diese Weise erhöht wird. Der Wasserzulauf 15 ist in dem gezeigten Beispiel übliches Stadtwasser, dessen Druck durch einen figürlich nicht dargestellten Druckminderer herabgesetzt ist.

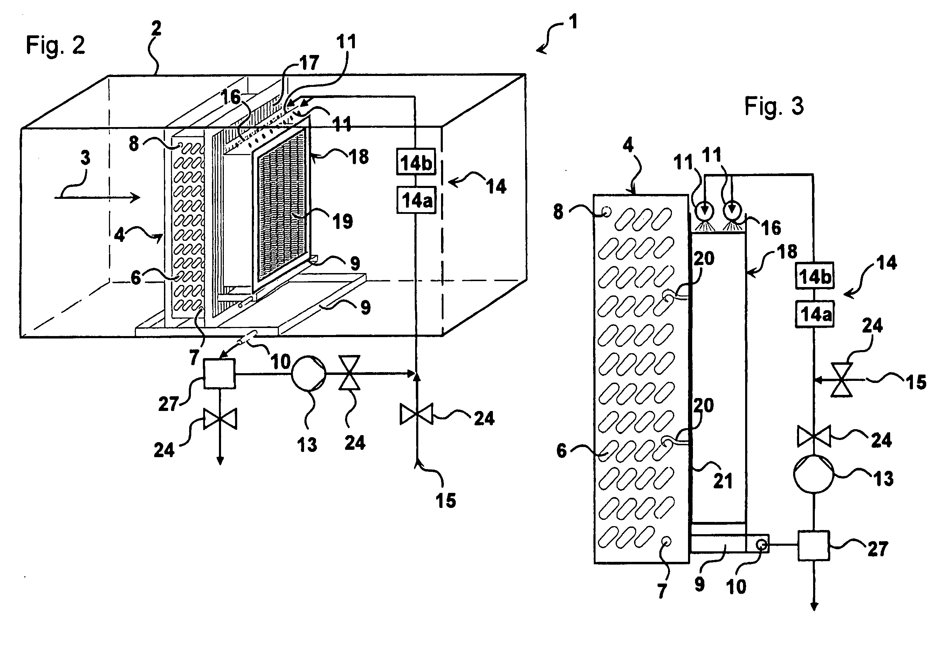

Figur 2 zeigt ein weiteres Ausführungsbeispiel der erfindungsgemäßen Vorrichtung 1, die wieder über ein Wärmaustauschregister 4 verfügt, das jedoch in diesem Ausführungsbeispiel mit gleichmäßig voneinander beabstandeten Lamellen 17 versehen ist, durch die sich in Querrichtung die Heizschlange 6 erstreckt. Die Lamellen 17 weisen zueinander einen Abstand von 1 bis 6 mm sowie eine Wanddicke von 0,1 mm bis 0,6 mm auf. Dabei kontaktieren die Lamellen 17 die Heizschlange 6, so dass die aktive Oberfläche des Wärmeaustauschregisters 4 vergrößert ist. In Richtung des Luftstromes 3 hinter dem Wärmeaustauschregister 4 ist ein Verrieselungsfeld 18 erkennbar, über dem sich die Düsenrohre 11 erstrecken. Das Verrieselungsfeld 18 weist labyrinthartig angeordnete Luftbefeuchtungsflächen 19 auf, die aus einem porösen Material bestehen. Unterhalb des Verrieselungsfeldes 18 ist eine zweite Kondenswanne 9 vorgesehen, die zum Auffangen von aus dem Verrieselungsfeld 18 austretendem flüssigem Restwasser vorgesehen ist.

Figur 3 zeigt die erfindungsgemäße Vorrichtung 1 gemäß Figur 2 in einer Seitenansicht. Es wird deutlich, dass das Verrieselungsfeld 18 durch Verbindungshacken 20 in die Heizschlange 6 eingehakt ist und so an dem Wärmeaustauschregister 4 gehalten ist. Die Verbindungshaken 20 sind aus einem metallischen Material gefertigt, so dass es sowohl durch die Verbindungshacken 20 als auch über ein Rahmenteil 21 des Verrieselungsfeldes 18, das an den Lamellen 17 anliegt zu einer wärmeleitenden Verbindung zwischen dem Wärmeaustauschregister 4 aus dem Verrieselungsfeld 18 kommt. Darüber hinaus kontaktieren auch die Luftbefeuchtungsflächen 19 die Lamellen 17.

Durch diese ausgeprägte wärmeleitende Verbindung zwischen Verrieselungsfeld 18 und den Lamellen 17 und somit mit der Heizschlange 6 werden die Luftbefeuchtungsflächen 19 wirkungsvoll erwärmt, so dass das von den Düsenrohren 11 über die Öffnungen 16 in das Verrieselungsfeld 18 eingeträufelte Wasser nach der Aufnahme durch das poröse Material der Luftbefeuchtungsflächen 19 verdampft und zur Erhöhung der relativen Luftfeuchtigkeit von dem Luftstrom 3 aufgenommen wird.

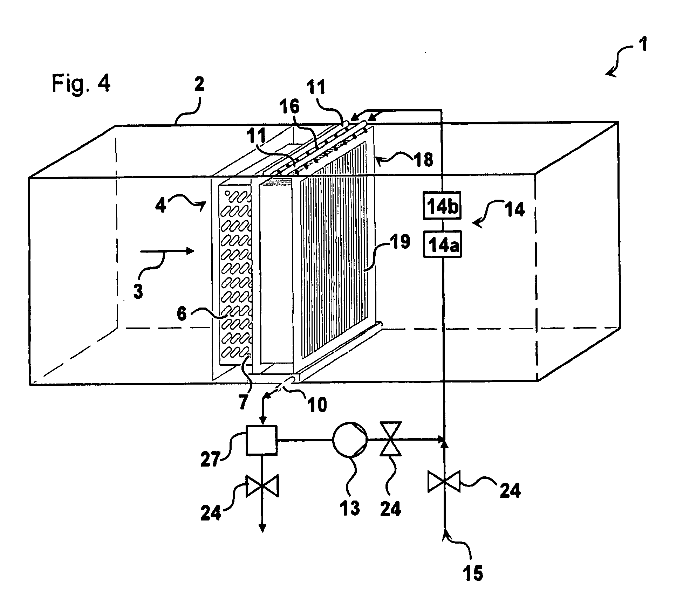

Figur 4 zeigt ein weiteres Ausführungsbeispiel der erfindungsgemäßen Vorrichtung 1, die hier wie in Figur 2 und 3 aus einem herkömmlichen Lamellen 17 aufweisenden Wärmeaustauschregister 4 sowie aus einem Verrieselungsfeld 18 besteht, über dem Düsenrohre 11 angeordnet sind. Im Gegensatz zu den in den Figuren 2 und 3 gezeigten Ausführungsbeispiel bilden die Luftbefeuchtungsflächen 19 jedoch kein Labyrinth auf sondern sind ebenfalls als Lamellen ausgebildet. Die Lamellen der Luftbefeuchtungsflächen 19 sind jedoch mit einem porösen Material beschichtet. Bei dem hier gezeigten Ausführungsbeispiel sind die Öffnungen 16 zusammen mit dem Wasserdruck, unter dem das befeuchtende Wasser herangeführt wird, so ausgebildet, dass das Wasser aus den Düsenrohren 11 langsam austritt und an den Seitenflächen der lamellenförmigen Luftbefeuchtungsflächen herunter rinnt, wobei das Wasser von der porösen Schicht fast vollständig aufgenommen wird. Auf Grund der wärmeleitenden Verbindung mit der Heizschlange 6 erwärmt sich die poröse Beschichtung der Luftbefeuchtungsflächen 19, so dass Wasserdampf in den Luftstrom 3 geführt und dessen relative Luftfeuchtigkeit erhöht wird.

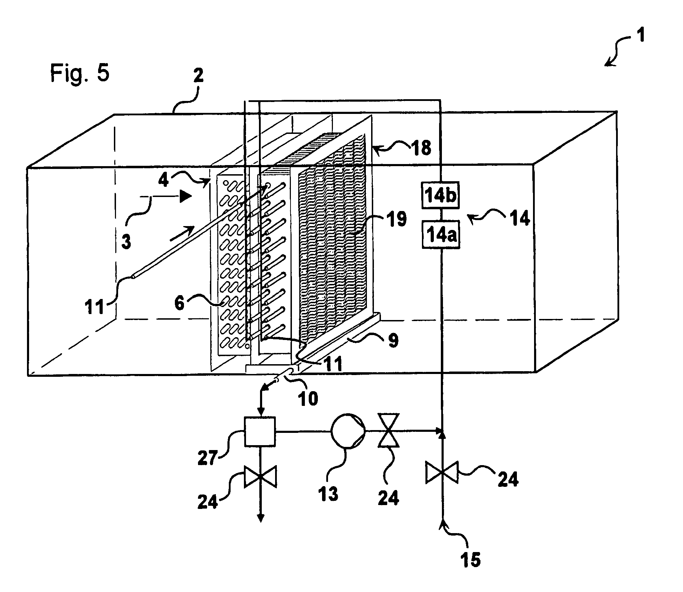

Figur 5 zeigt ein weiteres Ausführungsbeispiel der erfindungsgemäßen Vorrichtung 1, bei dem ein Wärmeaustauschregister 4 sowie ein dem Wärmeaustauschregister nachgeordnetes Verrieselungsfeld 18 gezeigt sind. Das Verrieselungsfeld 18 weist labyrinthartig angeordnete Befeuchtungsfächen 19 auf, die jedoch nicht vollständig aus einem porösem oder hydrophilen Material bestehen sondern lediglich mit einem porösen Material beschichtet sind. Zum Benetzen des porösen Materials erstrecken sich Düsenrohre 11 durch das Verrieselungsfeld 18 hindurch, wobei Wasser aus einem Frischwasserzulauf 15 über das ansteuerbares Sperrventil 24, dem Ionenaustauscher 14a sowie der Wasseraufbereitungseinheit 14b gefiltert zu den Düsenrohren 11 geleitet wird. Das gefilterte Wasser wird über die in den Düsenrohren 11 vorgesehen figürlich nicht dargestellten Öffnungen auf die poröse Beschichtung 19 gegeben.

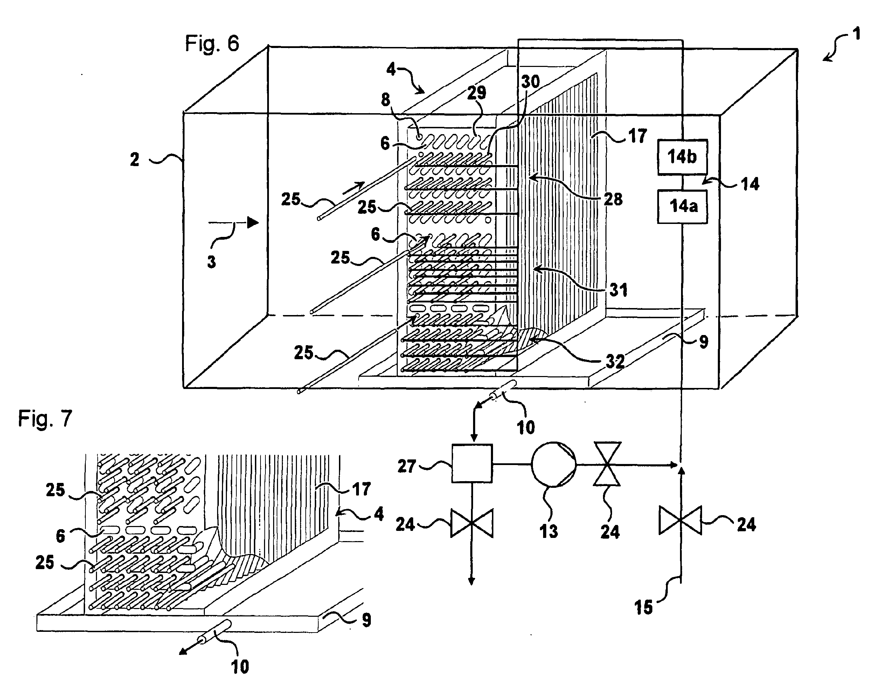

Figur 6 zeigt ein bevorzugtes Ausführungsbeispiel der erfindungsgemäßen Vorrichtung 1, wobei ein mit üblichen Lamellen 17 versehenes Wärmeaustauschregister 4 verdeutlicht ist. Die Lamellen 17 sind voneinander gleich beabstandet und werden in einer Querrichtung von einer Heizschlange 6 sowie von Befeuchtungsrohren 25 aus einem porösen Material durchsetzt. Die Heizschlange 6 wird wieder von einer Heizflüssigkeit durchsetzt. Durch die Befeuchtungsrohre 25 wird druckvermindertes Wasser geleitet, das aus dem Rohrinneren durch poröse Wandung der Befeuchtungsrohre 25 dringt und an der Außenfläche verdampft wird. Die Befeuchtungsrohre 25 bestehen aus einem keramischen Material hier Aluminiumoxid und weisen eine Porengröße von weniger als 20 µm und vorteilhafterweise von weniger als 10µm µm auf.

Zur Veranschaulichung sind in Figur 6 einige Befeuchtungsrohre 25 aus dem Wärmeaustauschregister hinausgezogen gezeichnet. Es ergeben sich beliebige Verschaltungsmöglichkeiten in dem Wärmeaustauschregister 4, von denen in Figur 6 drei gezeigt sind. Hierauf wird im Folgenden genauer eingegangen:

In Figur 6 sind drei unterschiedliche Verschaltungspakete 28, 31 und 32 erkennbar. Das obere Paket 28 ist so verschaltet, dass sich an paarweise übereinander liegenden Lagen von Heizschlangenrohren 6 mit paarweise übereinander liegende Lagen von Befeuchtungsrohren 25 abwechseln, wobei die Lagenpaare jeweils durch U-förmige Überbrückungsrohre 29 bzw. 30 miteinander verbunden sind.

In dem darunter liegenden Paket 31 sind die Rohrabschnitte der Heizschlange 6 sowie die Befeuchtungsrohre 25 horizontal nebeneinander angeordnet.

Figur 7 zeigt die Verschaltung des unteren Paketes 32 in einer vergrößerten Detailansicht. Es ist erkennbar, dass gerade Rohrabschnitte der Heizschlange 6 horizontal nebeneinander angeordnet sind und auf diese Weise eine Lage von Heizschlangenrohren ausbilden. Die Befeuchtungsrohre 25 sind vertikal versetzt zwischen den Lagen der Heizschlangenrohre 6 angeordnet.

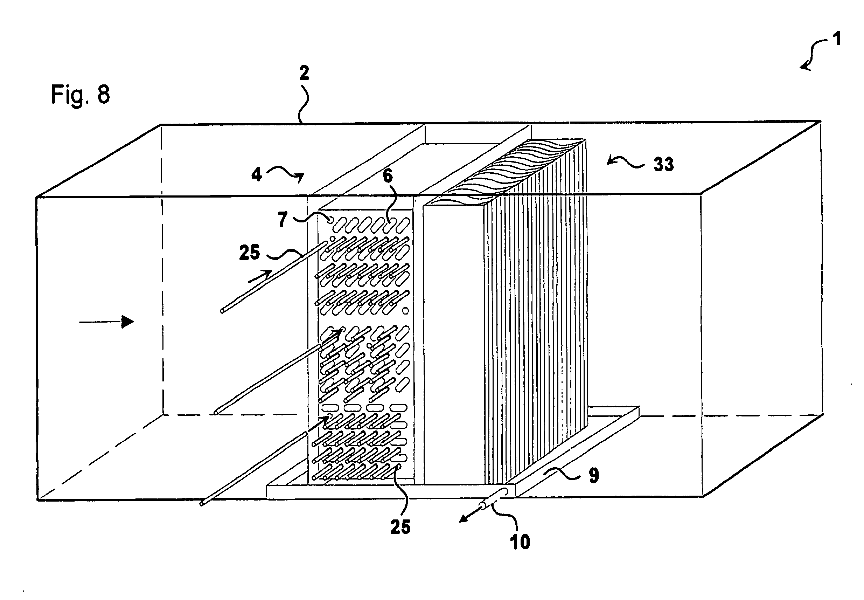

Figur 8 zeigt ein weiteres Ausführungsbeispiel der erfindungsgemäßen Vorrichtung 1, das dem in Figur 7 gezeigten Ausführungsbeispiel im Wesentlichen entsprich. In diesem Fall ist jedoch in Richtung des Luftstromes 3 hinter dem Wärmeaustauschregister 4 ein Tropfenabscheider 33 angeordnet. Tropfenabscheider sind aus dem Stand der Technik bekannt, so dass an dieser Stelle auf deren Ausgestaltung nicht eingegangen zu werden braucht. Der Tropfenabscheider 33 vermeidet das Mitreißen von flüssigem Wasser durch den Luftstrom 3 in Bereiche der raumlufttechnischen Anlage, die dem Wärmeaustauschregister 4 nachgeordnet sind.

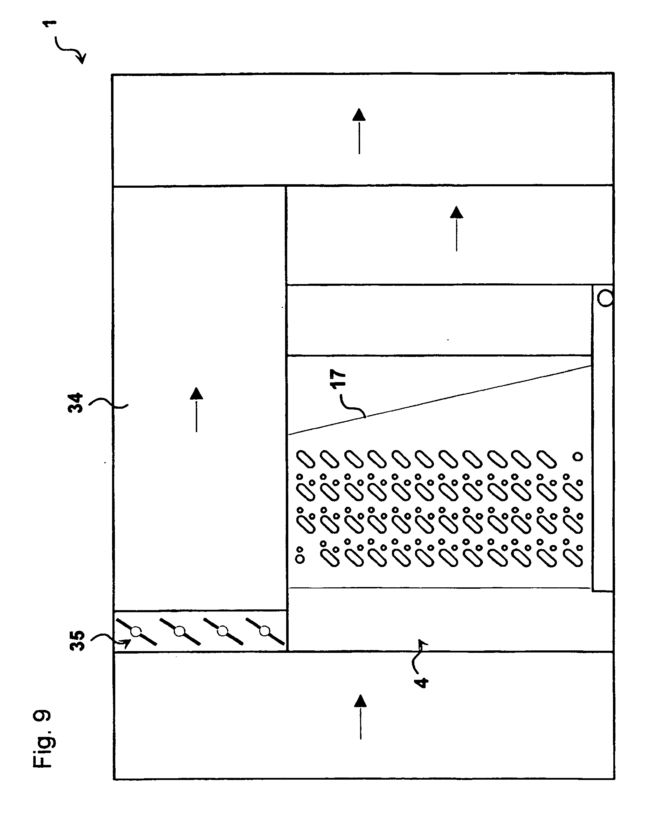

Figur 9 zeigt ein weiteres Ausführungsbeispiel der erfindungsgemäßen Vorrichtung 1 in einer schematischen Seitenansicht. Gemäß dieser Ausführungsform ist ein Bypasskanal 34 vorgesehen, an dessen Eintrittsöffnung Lüftungsregelungsklappen 35 angeordnet sind. Die Lüftungsregelungsklappen 35 sind drehbar gelagert und liegen in einer geschlossenen Stellung aneinander an, so dass der Eintritt von Luft in den Bypasskanal 34 verhindert ist. Bei einer vollständig geöffneten Stellung hingegen bilden die Lüftungsregelungsklappen 35 kaum einen Luftwiderstand, so dass ein maximaler Teilluftstrom um das Wärmeaustauschregister 4 herumgeleitet wird. Der über den Bypasskanal 34 fließende Teil des Luftstromes 3 wird nicht erwärmt. Der durch das Wärmeaustauschregister 4 geleitete Luftstromanteil erfährt jedoch eine starke Erwärmung, wobei die relative Luftfeuchtigkeit durch die nicht dargestellten Luftbefeuchtungsmittel mit ihrem porösen Material und ihrer Wasserspendereinheit für eine Erhöhung der relativen Luftfeuchtigkeit der erwärmten Luft sorgen. Durch das Wärmeaustauschregister 4 wird der Luftstrom so hoch erwärmt, dass dessen Temperatur vom Menschen als zu heiß empfunden würde. So wird beispielsweise die Temperatur auf 27 °C erhöht. Die Luft hat bei dieser Temperatur ein sehr viel höheres Wasseraufnahmevermögen als beispielsweise 13° Celsius kalte Frischluft. Anschließend wird der auf 27 °C erwärmte Luftstrom mit dem über den Bypasskanal gelenkten Teilluftstrom, dessen Temperatur 13 °C beträgt, vermischt, so dass sich die Temperatur des gesamten Luftstroms 3 wieder auf etwa 20°C absinkt. Der absolute Wassergehalt des gesamten Luftstroms 3, der sich aus dem gewichteten Mittel der beiden Teilluftströme zusammensetzt, bleibt jedoch konstant, so dass die relative Luftfeuchtigkeit des austretenden Luftstromes 3 erhöht ist.

Es ist ferner erkennbar, dass die Lamellen 17 schräg ausgebildet sind. Wassertropfen, die sich an den Lamellen trotz des porösen Materials sammeln, werden daher erschwert vom Luftstrom 3 abgerissen. Die sich aus Schwerkraft und Impulskraft des Luftstroms 3 ergebende Kraftresultierende ist so etwa entlang der Kante der Lamelle 17 gerichtet, wodurch das Herunterfließen der Wassertropfen unterstützt wird.

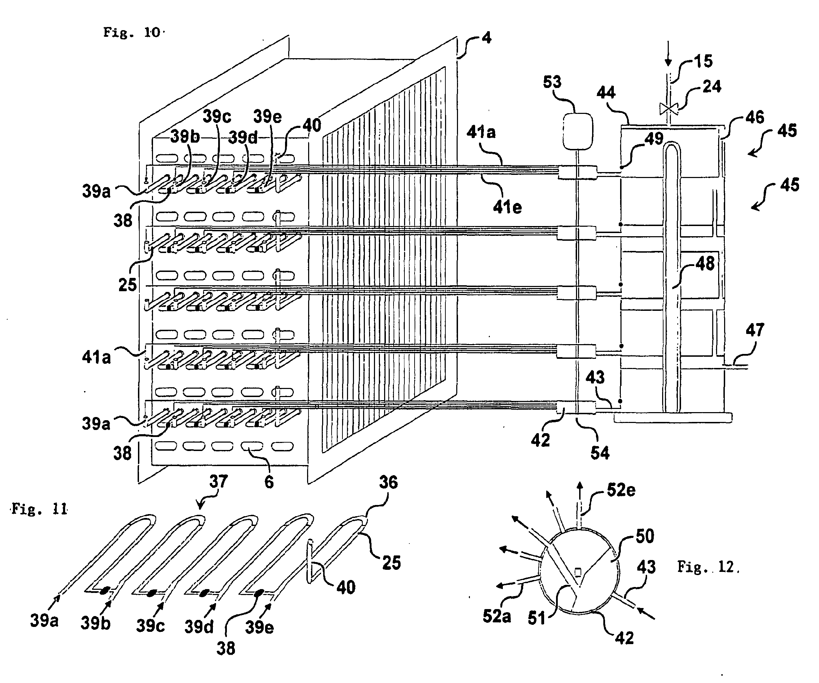

Figur 10 zeigt eine weiterentwickelte Vorrichtung gemäß Figur 6. Das dort dargestellte Wärmeregister 4 weist eine Heizschlange 6 mit in einer Ebene verlaufenden Rohrabschnitten auf, die durch U-förmige Verbindungsstücke miteinander kommunizieren. Zwischen solchen Lagen der Heizschlange 6 sind Befeuchtungsrohre 25 angeordnet, die ebenfalls in einer Ebene angeordnet sind.

Figur 11 zeigt in einer vergrößerten Darstellung einer einzelnen Lage von Befeuchtungsrohren 25, die durch Verbindungsbögen 36 miteinander verbunden sind. Es ist erkennbar, dass eine Lage von Befeuchtungsrohren 25 aus U-förmigen Teilabschnitten 37 zusammengesetzt ist, die voneinander durch Rückschlagventile 38 abgegrenzt sind. Jeder Teilabschnitt 37 weist einen eigenen Eingangsstutzen 39a bis 39e auf, wobei die Rückschlagventile 38 einen Durchfluss in der Richtung von dem Teilabschnitt 39a zu 39b erlauben, in entgegen gesetzter Flussrichtung jedoch eine Sperrwirkung entfalten. Am letzten Teilabschnitt 37 ist eine Überlauf 40 vorgesehen.

Wieder mit Bezug auf Figur 10 ist erkennbar, dass jeder Eingangsstutzen 39a bis 39e über eine eigene Verbindungsleitung 41a bis 41e mit einer Verteilereinheit 42 verbunden ist. Dabei ist jede Lage von Befeuchtungsrohren 25 jeweils einer Verteilereinheit 42 zugeordnet. Jede Verteilereinheit 42 kommuniziert wiederum über ein Verbindungsstück 43 mit einer Überlaufkaskade 44, die über ein Sperrventil 24 mit einem Wasserzulauf 15 verbunden ist. In der Überlaufkaskade 44 sind mehrere Verteilerböden 45 erkennbar, die jeweils mit einem Überlaufrohr 46 versehen sind. Übersteigt das Niveau des in einem Verteilerboden 45 befindlichen Befeuchtungswassers die Höhe des Überlaufrohres 46, läuft das Befeuchtungswasser in den darunter liegenden Verteilerboden 45 ab, bis es schließlich über einen Überlauf 47 aus der Überlaufkaskade 44 austritt. Zur Vermeidung von Keimwachstum ist im Inneren der Überlaufkaskade 44 eine UV-Lampe 48 angeordnet, welche die Verteilerböden 45 dichtend durchgreift. Die Überlaufkaskade 44 wirkt als Druckminderer, wobei der maximale Druck von etwa 0,01 bar, mit dem das Befeuchtungswasser den Verteilereinheiten jeweils zugeführt wird, von der Länge des Überlaufrohres 46 bestimmt ist. Auf Grund der kaskadenförmigen Ausgestaltung dieses Druckminderers ist es möglich, jede Lage von Befeuchtungsrohren 25 mit gleichem Wasserdruck zu beaufschlagen. Dabei weist der offene Überlauf 40 etwa das gleiche Niveau bzw. die gleiche Höhe oder die gleiche Länge auf wie das ihm zugeordnete Überlaufrohr 46.

Der minimale Druck, mit dem die Befeuchtungsrohre 25 in der dargestellten Vorrichtung beaufschlagbar sind, ist von der Positionierung eines Sensors 49 in jedem Verteilerboden 45 abhängig. Sinkt das Niveau des Befeuchtungswassers eines Verteilerbodens 45 unter den Sensor 49 ab, verursacht der Sensor 49 die Öffnung des ansteuerbaren Sperrventils 24, das sich daraufhin öffnet und für ein Ansteigen des Niveaus sorgt.

Figur 12 zeigt die Verteilereinheit 42 in einer vergrößerten Darstellung. Es ist erkennbar, dass das Befeuchtungswasser über das Verbindungsstück 43 in eine Verteilerkammer 50 eintritt. Von dort gelangt sie über ein Verteilerrohr 51 zu einem der Ansschlussstutzen 52a bis 52e, die jeweils über eine Verbindungsleitung 41a bis 41e mit einem der Eingangsstutzen 39a bis 39e der Befeuchtungsrohre 25 verbunden sind. Die Richtung des Verteilerrohrs 51 ist über einen Stellmotor 53 veränderbar, dessen Antriebsbewegung über eine Antriebswelle 54 in die Verteilereinheit 42 eingeleitet wird. Dabei ist der Stellmotor 53 von einer figürlich nicht dargestellten Steuereinheit steuerbar, die mit einem Feuchtigkeitssensor zusammenwirkt.

Stellt die Steuereinheit mittels des Feuchtigkeitssensors ein Absinken der relativen Luftfeuchtigkeit, unter einen festgelegten Schwellenwert fest, veranlasst diese mittels des Stellmotors 53 und der Verteilereinheit 42, dass der Eingangsstutzen 39a mit Befeuchtungswasser versorgt wird. Das Befeuchtungswasser läuft dann bei vermindertem Druck in jeder Lage über alle Teilabschnitte 37 der Befeuchtungsrohre 25. Bei der Ansteuerung des Eingangsstutzens 39e wird hingegen in jeder Lage nur ein Teilabschnitt 37 der Befeuchtungsrohre 25 von Innen mit Befeuchtungswasser benetzt.

Bei der Verwendung von Porösen Befeuchtungsrohren 25 mit einer geringeren Porosität können zum Erreichen der erforderlichen Befeuchtungsleistung, d.h. Durchsatz von Befeuchterwasser, evtl. höhere Wasserdrücke erforderlich sein, wozu gegebenenfalls entsprechende Druckerhöhungspumpen zum Einsatz kommen. Bei der in den Figuren 10 - 12 dargestellten Vorrichtung kann die Druckerhöhung durch entsprechende Erhöhung des Luftdruckes in der Überlaufkaskade 44 z.B. mittels konventioneller elektrischer Luftpumpen erfolgen.

## Patentansprüche

1. Vorrichtung (1) zur Erwärmung eines Luftstromes (3) mit einem im Wege des Luftstromes (3) angeordneten und vom Luftstrom durchströmbaren Wärmeaustauschregister (4), das Wärmeaustauschflächen (17) und Heizelemente (6) aufweist, welche wärmeleitend mit den Wärmeaustauschflächen (17) verbunden sind, wobei Luftbefeuchtungsmittel die relative Luftfeuchtigkeit des erwärmten Luftstromes (3) erhöhen, **dadurch gekennzeichnet, dass** die Luftbefeuchtungsmittel ein poröses Material (17, 19, 25) umfassen, das wärmeleitend mit den Heizelementen verbunden ist, wobei eine Wasserspendeeinheit (11, 15, 24) zum Benetzen des hydrophilen und/oder porösen Materials (17, 19, 25) mit Wasser vorgesehen ist.

2. Vorrichtung (1) nach Anspruch 1, **dadurch gekennzeichnet, dass** das poröse Material (17, 19, 25) zumindest teilweise hohl ausgebildet ist und die Wasserspendeeinheit (11, 15, 24) (25) zum Befeuchten des hohlen porösen Materials (17, 19, 25) von Innen eingerichtet ist.

3. Vorrichtung (1) nach Anspruch 2, **dadurch gekennzeichnet, dass** das hohle poröse Material poröse Befeuchtungsrohre (25) umfasst, wobei die Wasserspendeeinheit (11, 15, 24) einen Wasserdurchfluss durch die Befeuchtungsrohre (25) ermöglicht.

4. Vorrichtung (1) nach einem der vorhergehenden Ansprüche, **gekennzeichnet durch** Luftbefeuchtungsflächen (19), die aus einem porösen Material bestehen, wobei die Wasserspendeeinheit (11, 15, 24) zum Aufbringen des Wassers auf die Luftbefeuchtungsflächen (19) eingerichtet ist.

5. Vorrichtung (1) nach Anspruch 4, **dadurch gekennzeichnet, dass** die Luftbefeuchtungsflächen (19) ein Labyrinth ausbilden.

6. Vorrichtung (1) nach einem der vorhergehenden Ansprüche, **dadurch gekennzeichnet, dass** die Wärmeaustauschflächen (17) zumindest teilweise aus dem porösen Material bestehen, wobei die Wasserspendeeinheit (11, 15, 24) zum Aufbringen des Wassers auf die Wärmeaustauschflächen (17) eingerichtet ist.

7. Vorrichtung (1) nach einem der Ansprüche 1 bis 5, **gekennzeichnet durch** Wärmeaustauschflächen (17), die zumindest teilweise mit dem porösen und/oder einem hydrophilen Material beschichtet sind.

8. Vorrichtung (1) nach einem der vorhergehenden Ansprüche, **dadurch gekennzeichnet, dass** das poröse Material (17, 19, 25) in einem Verrieselungsfeld (18) angeordnet ist, das wärmeleitend mit dem Wärmeaustauschregister (4) verbunden ist.

9. Vorrichtung (1) nach einem der vorhergehenden Ansprüche, **dadurch gekennzeichnet, dass** die Luftbefeuchtungsmittel eine Feuchtigkeitsregelung aufweisen.

10. Vorrichtung (1) nach Anspruch 9, **dadurch gekennzeichnet, dass** die Feuchtigkeitsregelung eine Verteilereinheit aufweist, mit der die Oberfläche des benetzbaren porösen Materials bestimmbar ist.

11. Vorrichtung (1) nach einem der vorhergehenden Ansprüche, **gekennzeichnet durch** einen Bypasskanal (34) zum Überbrücken des Wärmeaustauschregisters (4), wobei der Bypasskanal (34) mit Lüftungsregelklappen (35) versehen ist, mit denen der in den Bypasskanal (34) eintretende Anteil des Luftstromes (3) regelbar ist und wobei der über den Bypasskanal (34) geleitete Anteil des Luftstromes (3) mit dem über das Wärmeaustauchregister (4) und das poröse Material (17, 19, 25) geleiteten Anteil des Luftstromes (3) vermischt wird.

12. Vorrichtung (1) nach einem der vorhergehenden Ansprüche, **gekennzeichnet durch** in einer Seitenansicht abgeschrägte Lamellen (17).

13. Verfahren zum Befeuchten eines einen Wärmeaustauschregister (4) durchströmenden Luftstromes (3), bei dem Wasser auf ein poröses Material (17, 19, 25) aufgebracht wird, das wärmeleitend mit Heizelementen (6) des Wärmeaustauschregisters (4) verbunden ist.

14. Verfahren nach Anspruch 13, **dadurch gekennzeichnet, dass** das poröse Material (17, 19, 25) mittels eines oberhalb des Wärmeaustauschregisters (4) angeordneten Düsenrohrs (11) mit Wasser benetzt wird.

15. Verfahren nach Anspruch 13 oder 14, **dadurch gekennzeichnet, dass** das poröse Material (17, 19, 25) sich in einem Wärmeaustauschregister (4) erstreckt und hohl ausgebildet ist, wobei Wasser innen durch das poröse Material (17, 19, 25) geleitet wird.

## Claims

1. Apparatus (1) for heating an air current (3) with a heat exchange register (4) disposed in the path of the air current (3) and adapted to allow the air current to flow through, said register (4) having heat exchange surfaces (17) and heating elements (6) which are connected in heat-conducting manner to the heat exchange surfaces (17), air humidifying means increasing the relative humidity of the heated air current (3), **characterised in that** the air humidifying means comprise a porous material (17, 19, 25) which is connected in heat-conducting manner with the heating elements, a water dispensing unit (11, 15, 24) being provided for wetting the hydrophilic and/or porous material (17, 19, 25) with water.

2. Apparatus (1) according to claim 1, **characterised in that** the porous material (17, 19, 25) is at least partially hollow in construction and the water dispensing unit (11, 15, 24, 25) is arranged so as to wet the hollow porous material (17, 19, 25) from the inside.

3. Apparatus (1) according to claim 2, **characterised in that** the hollow porous material comprises porous wetting pipes (25), the water dispensing unit (11, 15, 24) allowing water to flow through the wetting pipes (25).

4. Apparatus (1) according to one of the preceding claims, **characterised by** air humidifying surfaces (19) consisting of porous material, the water dispensing unit (11, 15, 24) being arranged so as to apply the water to the air humidifying surfaces (19).

5. Apparatus (1) according to claim 4, **characterised in that** the air humidifying surfaces (19) form a labyrinth.

6. Apparatus (1) according to one of the preceding claims, **characterised in that** the heat exchange surfaces (19) consist at least partly of the porous material, the water dispensing unit (11, 15, 24) being arranged so as to apply the water to the heat exchange surfaces (17).

7. Apparatus (1) according to one of claims 1 to 5, **characterised by** heat exchange surfaces (17) which are at least partially coated with the porous material and/or a hydrophilic material.

8. Apparatus (1) according to one of the preceding claims, **characterised in that** the porous material (17, 19, 25) is arranged in a sprinkling area (18) which is connected in heat-conducting manner to the heat exchange register (4).

9. Apparatus (1) according to one of the preceding claims, **characterised in that** the air humidifying means comprise a moisture regulator.

10. Apparatus (1) according to claim 9, **characterised in that** the moisture regulator comprises a distributor unit with which the surface area of the wettable porous material can be determined.

11. Apparatus (1) according to one of the preceding claims, **characterised by** a bypass channel (34) for bridging the heat exchange register (4), the bypass channel (34) being provided with ventilation regulating valves (35) by means of which the proportion of the air current (3) entering the bypass channel (34) can be regulated, and wherein the proportion of the air channel (3) directed through the bypass channel (34) is mixed with the proportion of the air current (3) directed via the heat exchange register (4) and the porous material (17, 19 25).

12. Apparatus (1) according to one of the preceding claims, **characterised by** fins (17) which are chamfered in side view.

13. Process for humidifying an air current (3) flowing through a heat exchange register (4), in which water is applied to a porous material (17, 19, 25) which is connected in heat-conducting manner to heating elements (6) of the heat exchange register (4).

14. Process according to claim 13, **characterised in that** the porous material (17, 19, 25) is wetted with water by means of a jet pipe (11) arranged above the heat exchange register (4).

15. Process according to claim 13 or 14, **characterised in that** the porous material (17, 19, 25) extends in a heat exchange register (4) and is of hollow construction, with water being directed inwardly through the porous material (17, 19, 25).

## Revendications

1. Dispositif (1) pour chauffer un flux d'air (3), avec un registre d'échange de chaleur (4) disposé dans le chemin du flux d'air (3) et susceptible d'être traversé par le flux d'air, le registre présentant des surfaces d'échange de chaleur (17) et des éléments chauffants (6) reliés de façon conductrice de la chaleur aux surfaces d'échange de chaleur (17), des moyens d'humidification de l'air augmentant l'humidité relative de l'air, du flux d'air (3) chauffé, **caractérisé en ce que** les moyens d'humidification de l'air comprennent un matériau (17, 19, 25) poreux, relié de façon conductrice de la chaleur aux éléments chauffants, une unité de distribution d'eau (11, 15, 24) étant prévue pour mouiller, avec de l'eau, le matériau (17, 19, 25) hydrophile et/ou poreux.

2. Dispositif (1) selon la revendication 1, **caractérisé en ce que** le matériau (17, 19, 25) poreux est au moins partiellement creux, et l'unité de distribution d'eau (11, 15, 24) (25) est agencée pour humidifier depuis l'intérieur le matériau (17, 19, 25) poreux creux.

3. Dispositif (1) selon la revendication 2, **caractérisé en ce que** le matériau poreux creux comprend des tubes d'humidification (25) poreux, l'unité de distribution d'eau (11, 15, 24) permettant un flux d'eau à travers les tubes d'humidification (25).

4. Dispositif (1) selon l'une des revendications précédentes, **caractérisé par** des surfaces d'humidification de l'air (19) composées d'un matériau poreux, l'unité de distribution d'eau (11, 15, 24) étant agencée pour appliquer de l'eau sur les faces d'humidification de l'air (19).

5. Dispositif (1) selon la revendication 4, **caractérisé en ce que** les surfaces d'humidification de l'air (19) forment un labyrinthe.

6. Dispositif (1) selon l'une des revendications précédentes, **caractérisé en ce que** les surfaces d'échange de chaleur (17) sont formées partiellement du matériau poreux, l'unité de distribution d'eau (11, 15, 24) étant agencée pour appliquer l'eau sur les surfaces d'échange de chaleur (17).

7. Dispositif (1) selon l'une des revendications 1 à 5, **caractérisé par** des surfaces d'échange de chaleur (17), revêtues au moins partiellement du matériau poreux et/ou d'un matériau hydrophile.

8. Dispositif (1) selon l'une des revendications précédentes, **caractérisé en ce que** le matériau (17, 19, 25) poreux est disposé dans un champ d'épandage (18), relié, de façon conductrice de la chaleur, au registre d'échange de chaleur (4).

9. Dispositif (1) selon l'une des revendications précédentes, **caractérisé en ce que** les moyens d'humification de l'air présentent une régulation de l'humidité.

10. Dispositif (1) selon la revendication 9, **caractérisé en ce que** la régulation d'humidité présente une unité distributrice, avec laquelle la surface du matériau poreux mouillable peut être déterminée.

11. Dispositif (1) selon l'une des revendications précédentes, **caractérisé par** un canal de dérivation (34) pour ponter le registre d'échange de chaleur (4), le canal de dérivation (34) étant muni de clapets de régulation d'aération (35), à l'aide desquels la proportion, entrant dans le canal de dérivation (34), du flux d'air (3) est réglable, et où la proportion, guidée par le canal de dérivation (34), du flux d'air (3) est mélangée à la proportion de flux d'air (3), guidée à travers le registre d'échange de chaleur et le matériau poreux (17, 19, 25).

12. Dispositif (1) selon l'une des revendications précédentes, **caractérisé par** des lamelles (17), biseautées lorsqu'on les observe en vue de côté.

13. Procédé d'humidification d'un flux d'air (3) traversant un registre d'échange de chaleur (4), pour lequel de l'eau est appliquée sur un matériau (17, 19, 25) poreux, relié de façon conductrice de la chaleur à des éléments chauffants (6) du registre d'échange de chaleur (4).

14. Procédé selon la revendication 13, **caractérisé en ce que** le matériau (17, 19, 25) poreux est mouillé par de l'eau, à l'aide du tube de buse (11) disposé au-dessus du registre d'échange de chaleur (4).

15. Procédé selon la revendication 13 ou 14, **caractérisé en ce que** le matériau (17, 19, 25) poreux s'étend dans un registre d'échange de chaleur (4) et est creux, de l'eau étant guidée intérieurement, à travers le matériau (17, 19, 25) poreux.
